# EUROPEAN PATENT APPLICATION

(11) **EP 4 613 089 A1**
(43) Date of publication of application: **10.09.2025**
(21) Application number: 23903330.1
(22) Date of filing: 01.12.2023
(51) Int. Cl.: A01G 7/00

(54) **CULTIVATION SUPPORT DEVICE, CULTIVATION SUPPORT METHOD AND PROGRAM**

(30) Priority: 15.12.2022 JP 2022200003
(71) Applicant: OMRON Corporation, Kyoto 600-8530 (JP)
(72) Inventor: OBAYASHI, Keiichi, Kyoto-shi, Kyoto 600-8530 (JP); HOSOMI, Shinichi, Kyoto-shi, Kyoto 600-8530 (JP)
(74) Representative: Isarpatent
(86) International application number: PCT/JP2023/043183
(87) International publication number: WO 2024/128041

(57) **Abstract**

Addressed is the problem of sharing time-series data of information related to a growth state of a crop and work on the crop, and identifying a relationship between the growth state of the crop and the work on the crop. A cultivation support device configured to support cultivation of a crop is configured to acquire time-series data of a plurality of growth information items related to a growth state of a crop, time-series data of a plurality of work information items related to work on the crop, and time-series data of a plurality of environment information items related to an environment surrounding the crop, analyze a causal relationship between the plurality of growth information items, the plurality of work information items, and the plurality of environment information items, create relationship information indicating a relationship between at least one of the plurality of growth information items and at least one of the plurality of work information items, and output the time-series data of the plurality of growth information items, the time-series data of the plurality of work information items, and the relationship information.

## Description

### TECHNICAL FIELD

The present invention relates to a cultivation support device, a cultivation support method, and a program that support cultivation.

### BACKGROUND ART

Patent Document 1, for example, describes a technique related to a growth analysis system, a growth analysis method, and a growth analysis program capable of deriving a correlation between a growth condition of an organism to be grown and a contained component of the organism grown according to the growth condition.

### CITATION LIST

### PATENT LITERATURE

Patent Literature 1: Japanese Patent No. 6848998

### SUMMARY OF INVENTION

### TECHNICAL PROBLEM

To date, persons skilled in cultivation work have performed cultivation on the basis of personal experience, relying on intuition and techniques, resulting in information related to cultivation work being accumulated in the minds of such skilled persons. Such skilled persons thus have no opportunity to reflect on the quality of their daily work, resulting in the possibility that the work performed is not optimal. Further, in a case in which the information related to cultivation work is in the minds of such skilled persons, it is difficult to share the information related to cultivation work with others. The technique disclosed in Patent Document 1 derives a correlation between a growth condition of an organism to be grown and a contained component of the organism grown according to the growth condition, but there is room for improvement.

The present invention has been made in view of the above circumstances, and an object thereof is to provide a technique that facilitates the sharing of time-series data of information related to a growth state of a crop and work on the crop, and the identification of a relationship between the growth state of the crop and the work on the crop.

### SOLUTION TO PROBLEM

A cultivation support device according to an aspect of the present invention is a cultivation support device configured to support cultivation of a crop. The cultivation support device includes a growth information acquisition unit configured to acquire time-series data of a plurality of growth information items related to a growth state of a crop; a work information acquisition unit configured to acquire time-series data of a plurality of work information items related to work on the crop; an environment information acquisition unit configured to acquire time-series data of a plurality of environment information items related to an environment surrounding the crop; an analysis unit configured to analyze a causal relationship between the plurality of growth information items, the plurality of work information items, and the plurality of environment information items on the basis of the time-series data of the plurality of growth information items, the time-series data of the plurality of work information items, and the time-series data of the plurality of environment information items; a relationship information creation unit configured to create relationship information indicating a relationship between at least one of the plurality of growth information items and at least one of the plurality of work information items on the basis of an analysis result of the causal relationship; and an output unit configured to output the time-series data of the plurality of growth information items, the time-series data of the plurality of work information items, and the relationship information.

According to the cultivation support device, by acquiring and outputting the time-series data of the plurality of growth information items and the time-series data of the plurality of work information items, it is possible to share the time-series data of the plurality of growth information items and the time-series data of the plurality of work information items. A user can then identify a relationship between at least one of the plurality of growth information items and at least one of the plurality of work information items by checking the time-series data of the plurality of growth information items, the time-series data of the plurality of work information items, and the relationship information.

The cultivation support device according to an aspect of the present invention may include a manual creation unit configured to create a work manual related to the work on the crop on the basis of the analysis result of the causal relationship. With this configuration, it is possible to create a work manual related to the work on the crop on the basis of the analysis result of the causal relationship between the plurality of growth information items, the plurality of work information items, and the plurality of environment information items.

In the cultivation support device according to an aspect of the present invention, the manual creation unit may be configured to create instruction information for providing instructions related to the work on the crop on the basis of the work manual, and the output unit may be configured to output the instruction information. This makes it possible for the user to check the instruction information and perform the work on the crop on the basis of the instruction information. In the cultivation support device according to an aspect of the present invention, the output unit may be configured to output the time-series data of the plurality of environment information items. This makes it possible for the user to identify the time-series data of the plurality of environment information items.

In the cultivation support device according to an aspect of the present invention, the growth information acquisition unit may be configured to acquire the time-series data of the plurality of growth information items on the basis of at least one of image data captured by an imaging device configured to capture an image of an object, input data input by a cultivator who cultivates the crop, or measurement data output from a sensor configured to measure the growth state of the crop. In the cultivation support device according to an aspect of the present invention, the work information acquisition unit may be configured to acquire the time-series data of the plurality of work information items on the basis of input data input by a cultivator who cultivates the crop. In the cultivation support device according to an aspect of the present invention, the environment information acquisition unit may be configured to acquire the time-series data of the environment information on the basis of at least one of measurement data output from a sensor configured to measure the environment information or input data input by a cultivator who cultivates the crop.

In the cultivation support device according to an aspect of the present invention, the output unit may be a display unit, and the display unit may be configured to display the time-series data of the plurality of growth information items, the time-series data of the plurality of work information items, and the relationship information. In the cultivation support device according to an aspect of the present invention, the relationship information may include first relationship information indicating a relationship between first growth information among the plurality of growth information items and first work information among the plurality of work information items, and second relationship information indicating a relationship between second growth information among the plurality of growth information items and second work information among the plurality of work information items, and the first relationship information and the second relationship information may be displayed on the display unit such that a display mode of the first relationship information and a display mode of the second relationship information differ from each other in accordance with a strength of a first causal relationship between the first growth information and the first work information and a strength of a second causal relationship between the second growth information and the second work information. Thus, the user can visually recognize that the display mode of the first relationship information and the display mode of the second relationship information differ from each other, and identify the strengths of the first causal relationship and the second causal relationship.

In the cultivation support device according to an aspect of the present invention, the relationship information may include first additional information including at least one of a line or an arrow connecting the at least one of the plurality of growth information items and the at least one of the plurality of work information items, and second additional information added to the at least one of the plurality of growth information items and the at least one of the plurality of work information items connected by the at least one line or arrow. In the cultivation support device according to an aspect of the present invention, the relationship information creation unit may be configured to create, when at least one of the growth information items in the time-series data of the plurality of growth information items is selected, the relationship information indicating a relationship between the selected at least one growth information item and the at least one of the plurality of work information items, on the basis of the analysis result of the causal relationship, and the relationship information creation unit may be configured to create, when at least one of the work information items in the time-series data of the plurality of work information items is selected, the relationship information indicating a relationship between the selected at least one work information item and the at least one of the plurality of growth information items, on the basis of the analysis result of the causal relationship.

In the cultivation support device according to an aspect of the present invention, the output unit may be a communication unit, and the communication unit may be configured to output, via a communication network, the time-series data of the plurality of growth information items, the time-series data of the plurality of work information items, and the relationship information. In the cultivation support device according to an aspect of the present invention, the output unit may be an audio unit, and the audio unit may be configured to output audio related to the time-series data of the plurality of growth information items, the time-series data of the plurality of work information items, and the relationship information. In the cultivation support device according to an aspect of the present invention, the output unit may be a print unit, and the print unit may be configured to print, on a recording medium, the time-series data of the plurality of growth information items, the time-series data of the plurality of work information items, and the relationship information.

A cultivation support method according to an aspect of the present invention is a cultivation support method executed by a computer. The cultivation support method includes acquiring time-series data of a plurality of growth information items related to a growth state of a crop, acquiring time-series data of a plurality of work information items related to work on the crop, acquiring time-series data of a plurality of environment information items related to an environment surrounding the crop, analyzing a causal relationship between the plurality of growth information items, the plurality of work information items, and the plurality of environment information items on the basis of the time-series data of the plurality of growth information items, the time-series data of the plurality of work information items, and the time-series data of the plurality of environment information items, creating relationship information indicating a relationship between at least one of the plurality of growth information items and at least one of the plurality of work information items on the basis of an analysis result of the causal relationship, and outputting the time-series data of the plurality of growth information items, the time-series data of the plurality of work information items, and the relationship information.

A program according to an aspect of the present invention is a program for causing a computer to execute acquiring time-series data of a plurality of growth information items related to a growth state of a crop, acquiring time-series data of a plurality of work information items related to work on the crop, acquiring time-series data of a plurality of environment information items related to an environment surrounding the crop, analyzing a causal relationship between the plurality of growth information items, the plurality of work information items, and the plurality of environment information items on the basis of the time-series data of the plurality of growth information items, the time-series data of the plurality of work information items, and the time-series data of the plurality of environment information items, creating relationship information indicating a relationship between at least one of the plurality of growth information items and at least one of the plurality of work information items on the basis of an analysis result of the causal relationship, and outputting the time-series data of the plurality of growth information items, the time-series data of the plurality of work information items, and the relationship information.

### ADVANTAGEOUS EFFECTS OF INVENTION

According to the present invention, it is possible to provide a technique that facilitates the sharing of time-series data of information related to a growth state of a crop and work on the crop and the identification of a relationship between the growth state of the crop and the work on the crop.

### BRIEF DESCRIPTION OF DRAWINGS

[FIG. 1] FIG. 1 is a block diagram illustrating a functional configuration of a cultivation support device.
[FIG. 2] FIG. 2 is a flowchart illustrating a flow of processing performed by the cultivation support device.
[FIG. 3] FIG. 3 is a schematic view illustrating a configuration of a cultivation support system.
[FIG. 4] FIG. 4 is a diagram illustrating an example of image analysis processing.
[FIG. 5] FIG. 5 is a diagram illustrating an example of the image analysis processing.
[FIG. 6] FIG. 6 is a chart illustrating an example of attribute information.
[FIG. 7] FIG. 7 is a chart illustrating an example of measurement data.
[FIG. 8] FIG. 8 is a schematic view illustrating an example of a case in which a Bayesian network is used as a method for analyzing a causal relationship.
[FIG. 9] FIG. 9 is a chart illustrating an example of the measurement data.
[FIG. 10] FIG. 10 is a schematic view illustrating an example of a case in which a Bayesian network is used as the method for analyzing the causal relationship.
[FIG. 11] FIG. 11 is a chart illustrating an example of the measurement data.
[FIG. 12] FIG. 12 is a diagram illustrating an example of time-series data of a plurality of growth information items, time-series data of a plurality of work information items, and relationship information.
[FIG. 13] FIG. 13 is a diagram illustrating an example of a scatter diagram.
[FIG. 14] FIG. 14A is a diagram illustrating an example of a vegetative growth level of a crop. FIG. 14B is a diagram illustrating an example of instruction information.

### DESCRIPTION OF EMBODIMENTS

Hereinafter, application examples and embodiments will be described with reference to the drawings. The application examples and embodiments described below are aspects of the present application, and do not limit the scope of rights of the present application.

### <Application Examples>

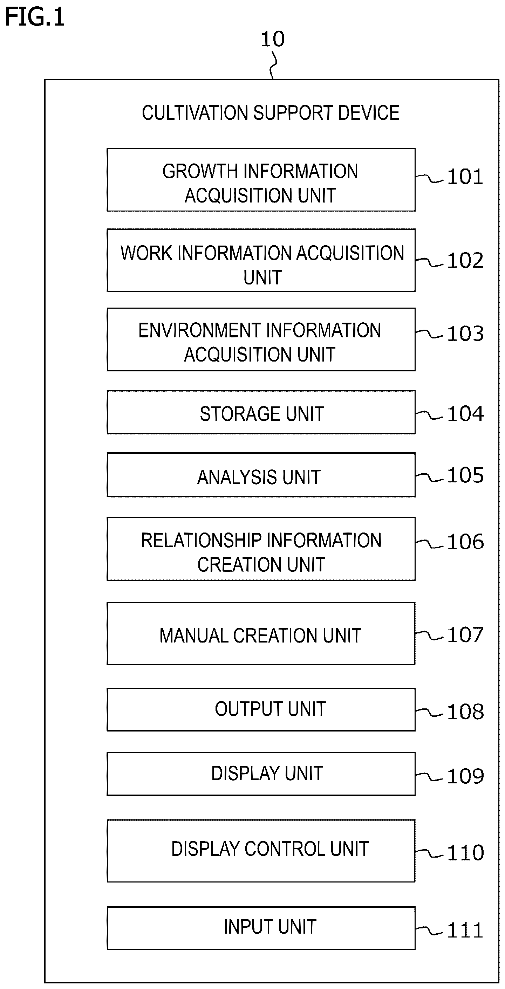

The present invention can be applied to a cultivation support device 10 illustrated in FIG. 1, for example. FIG. 1 is a block diagram illustrating a functional configuration of the cultivation support device 10. As illustrated in FIG. 1, the cultivation support device 10 includes a growth information acquisition unit 101, a work information acquisition unit 102, an environment information acquisition unit 103, a storage unit 104, an analysis unit 105, a relationship information creation unit 106, a manual creation unit 107, an output unit 108, a display unit 109, a display control unit 110, and an input unit 111. The cultivation support device 10 outputs information for supporting cultivation work of a worker in accordance with information input by each functional unit illustrated in FIG. 1. Not all constituent elements of the cultivation support device 10 illustrated in FIG. 1 are required, and constituent elements of the cultivation support device 10 may be added or deleted as appropriate. Further, some of the constituent elements (storage unit 104, for example) of the cultivation support device 10 illustrated in FIG. 1 may utilize a device on the Internet, such as a dedicated server or a cloud.

The growth information acquisition unit 101 acquires time-series data of a plurality of growth information items related to a growth state (developmental state) of a crop. The growth state of a crop includes, for example, stem height, stem thickness, leaf quantity, leaf size, leaf quality, flower quantity, flower size, flower quality, fruit quantity, fruit size, fruit quality, foliage height, bud quantity, and bud size, but is not limited thereto. The growth information also includes leaf area (LA), leaf area index (LAI), yield, and the like. LA refers to the leaf area and LAI refers to the leaf area index. The time-series data of the plurality of growth information items includes time-series data of a plurality of growth information items related to the same type of growth state of the crop and time-series data of a plurality of growth information items related to a plurality of types of growth states of the crop.

The work information acquisition unit 102 acquires time-series data of a plurality of work information items related to work on a crop. The work on a crop includes, for example, leaf removal, bud removal, pinching, flower removal, watering, supplemental fertilization, trellising, pesticide spraying, and harvesting, but is not limited thereto. The time-series data of the plurality of work information items includes time-series data of a plurality of work information items related to the same type of work on the crop and time-series data of a plurality of work information items related to a plurality of types of work on the crop. The environment information acquisition unit 103 acquires time-series data of a plurality of environment information items related to an environment surrounding the crop. The environment information includes temperature information, humidity information, solar radiation amount information, and the like, but is not limited thereto. The storage unit 104 stores the time-series data of the plurality of growth information items, the time-series data of the plurality of work information items, and the time-series data of the plurality of environment information items.

The analysis unit 105 analyzes a causal relationship between the plurality of growth information items, the plurality of work information items, and the plurality of environment information items on the basis of the time-series data of the plurality of growth information items, the time-series data of the plurality of work information items, and the time-series data of the plurality of environment information items. The relationship information creation unit 106 creates relationship information indicating a relationship between at least one of the plurality of growth information items and at least one of the plurality of work information items on the basis of an analysis result of the causal relationship by the analysis unit 105.

The manual creation unit 107 creates a work manual related to the work on the crop on the basis of the analysis result of the causal relationship by the analysis unit 105. The work manual includes, for example, information related to a type of the work performed on the crop, a timing of the work, and a work procedure. The work manual may include a cultivation manual related to cultivation. Further, the manual creation unit 107 creates instruction information for providing instructions related to the work on the crop on the basis of the work manual. The output unit 108 outputs the time-series data of the plurality of growth information items, the time-series data of the plurality of work information items, and the relationship information. The output of the output unit 108 includes at least one of a display output, an audio output, a communication output, or a print output. The output unit 108 outputs the time-series data of the plurality of environment information items. The output unit 108 outputs the instruction information created by the manual creation unit 107. The output unit 108 outputs the time-series data of the plurality of environment information items. The display unit 109 displays predetermined data in accordance with the display output of the output unit 108. The display unit 109 displays the time-series data of the plurality of growth information items, the time-series data of the plurality of work information items, and the relationship information. The display unit 109 displays the time-series data of the plurality of environment information items. The display unit 109 displays the instruction information created by the manual creation unit 107. The display control unit 110 controls the display of the display unit 109. The input unit 111 receives various inputs and selections from a user. The user is, for example, a cultivator who cultivates the crop, but is not particularly limited thereto. The cultivator includes a skilled person, a non-skilled person, and the like related to the cultivation of the crop. The output unit 108 and the display unit 109 may be integrated. The output unit 108 may have some or all of the functions of the display unit 109. The display unit 109 may have some or all of the functions of the output unit 108.

### <Processing Flow>

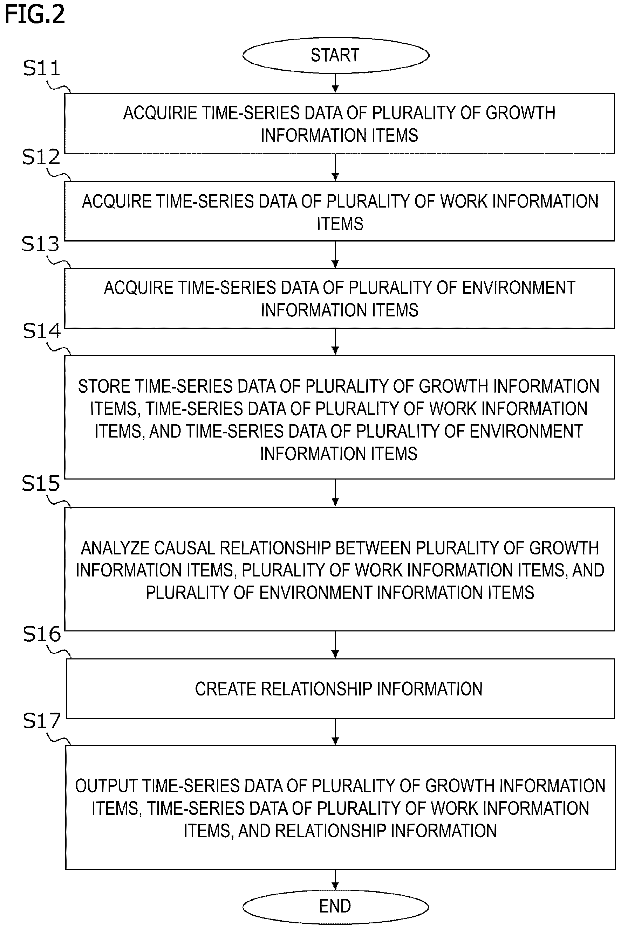

Next, an example of processing performed by the cultivation support device 10 will be described with reference to FIG. 2. FIG. 2 is a flowchart illustrating a flow of processing performed by the cultivation support device 10.

The growth information acquisition unit 101 acquires the time-series data of the plurality of growth information items (step S11). The work information acquisition unit 102 acquires the time-series data of the plurality of work information items (step S12). The environment information acquisition unit 103 acquires the time-series data of the plurality of environment information items (step S13). The storage unit 104 stores the time-series data of the plurality of growth information items, the time-series data of the plurality of work information items, and the time-series data of the plurality of environment information items (step S14).

The analysis unit 105 analyzes the causal relationship between the plurality of growth information items, the plurality of work information items, and the plurality of environment information items on the basis of the time-series data of the plurality of growth information items, the time-series data of the plurality of work information items, and the time-series data of the plurality of environment information items (step S15). The analysis unit 105 may analyze the causal relationship between the plurality of growth information items, the plurality of work information items, and the plurality of environment information items by using a method for analyzing a dependency relationship between variables by a probability model such as, for example, a Bayesian network. The relationship information creation unit 106 creates relationship information indicating a relationship between at least one of the plurality of growth information items and at least one of the plurality of work information items on the basis of an analysis result of the causal relationship by the analysis unit 105 (step S16). The output unit 108 outputs the time-series data of the plurality of growth information items, the time-series data of the plurality of work information items, and the relationship information (step S17). In step S17, the display unit 109 may display the time-series data of the plurality of growth information items, the time-series data of the plurality of work information items, and the relationship information.

The cultivation support device 10 acquires and outputs the time-series data of the plurality of growth information items and the time-series data of the plurality of work information items, making it possible to share the time-series data of the information related to the growth state of the crop and the work on the crop. The cultivation support device 10 displays the time-series data of the plurality of growth information items and the time-series data of the plurality of work information items, making it possible to visualize the time-series data of the information related to the growth state of the crop and the work on the crop. The cultivation support device 10 displays the time-series data of the plurality of growth information items, making it possible for the user to visually recognize changes in the growth information in time series. The cultivation support device 10 displays the time-series data of the plurality of work information items, making it possible for the user to visually recognize changes in the work information in time series. Further, the cultivation support device 10 analyzes the causal relationship between the plurality of growth information items, the plurality of work information items, and the plurality of environment information items, and outputs the time-series data of the plurality of growth information items, the time-series data of the plurality of work information items, and the relationship information, making it possible to share the causal relationship between the plurality of growth information items, the plurality of work information items, and the plurality of environment information items. The cultivation support device 10 acquires and outputs the time-series data of the plurality of environment information items, making it possible to share the time-series data of the plurality of environment information items.

The user identifies the time-series data of the plurality of growth information items, the time-series data of the plurality of work information items, and the relationship information. Accordingly, the user can identify the relationship between at least one of the plurality of growth information items and at least one of the plurality of work information items. For example, in a case in which the fruit quantity of the crop and the flower removal work are output in time series and the relationship information indicating a relationship between the predetermined fruit quantity of the crop and the predetermined flower removal work is output, the user can identify the relationship between the predetermined fruit quantity of the crop and the predetermined flower removal work. This makes it possible for the user to identify the relationship between the growth state of the crop and the work on the crop. That is, this makes it possible to identify how growth information (fruit quantity, for example) at a certain point in time is the result of being affected by any work information or environment information in the temporal past. Further, this makes it possible to estimate how a certain work or environment at a predetermined point in time may affect growth information (fruit quantity, for example) in the temporal future. Accordingly, this allows the user to reflect on his or her work content. Further, even non-skilled persons can estimate how much the crop will grow by understanding what actions should be taken in response to the current growth state of the crop.

### <Embodiments>

Next, a cultivation support system 1 and the cultivation support device 10 according to an embodiment will be described. However, dimensions, materials, shapes, relative arrangements, and the like of the constituent elements described in this embodiment are not intended to limit the scope of this invention unless otherwise specified.

### <System Configuration>

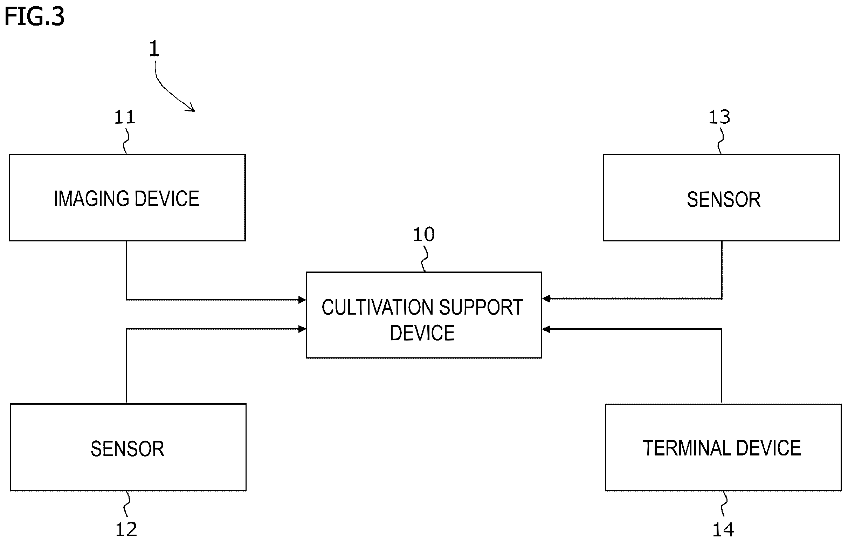

An overall configuration of the cultivation support system 1 according to the present embodiment will be described with reference to FIG. 1 and FIG. 3. FIG. 3 is a schematic view illustrating the configuration of the cultivation support system 1. The cultivation support system 1 includes the cultivation support device 10, an imaging device 11, sensors 12, 13, and a terminal device 14.

The cultivation support device 10 may be constituted by a general-purpose computer. The cultivation support device 10 includes a control device, an input device, an output device, a storage device, a communication device (communication output device), and the like. The input device is, for example, a keyboard, a mouse, or a touch panel. The output device includes a display output device, an audio output device, and a print output device. The display output device is, for example, a liquid crystal display, a plasma display, or an organic electroluminescence (EL) display. The audio output device is, for example, a speaker. The print output device is, for example, a printer. The storage device is, for example, a memory or a hard disk drive. The communication device is, for example, a local area network (LAN) interface board or a wireless communication circuit. The communication device performs communication output to an external device. Further, a form of the cultivation support device 10 is not particularly limited, and may be various modes such as a desktop computer, a laptop computer, a tablet computer, an information processing terminal, or a smartphone.

The display unit 109 (display output device) displays the time-series data of the plurality of growth information items, the time-series data of the plurality of work information items, and the relationship information. In a case in which the output unit 108 functions as an audio output device (audio unit), the output unit 108 outputs audio related to the time-series data of the plurality of growth information items, the time-series data of the plurality of work information items, and the relationship information. The output unit 108 may output the audio related to the time-series data of the plurality of growth information items, the time-series data of the plurality of work information items, and the relationship information by changing a volume of the audio, a pitch of the audio, an intonation of the audio, or the like. In a case in which the output unit 108 functions as a print output device (print unit), the output unit 108 prints the time-series data of the plurality of growth information items, the time-series data of the plurality of work information items, and the relationship information on a recording medium. The output unit 108 may print the time-series data of the plurality of growth information items, the time-series data of the plurality of work information items, and the relationship information on the recording medium in the same mode as a display mode of the display unit 109. The recording medium is, for example, paper, cloth, or plastic, but is not limited thereto. In a case in which the output unit 108 functions as a communication device (communication unit), the output unit 108 outputs the time-series data of the plurality of growth information items, the time-series data of the plurality of work information items, and the relationship information via a communication network. A relationship flag serving as relationship information may be added to the time-series data of the plurality of growth information items and the time-series data of the plurality of work information items. The output unit 108 may output, via the communication network, the time-series data of the plurality of growth information items with the relationship flag added thereto and the time-series data of the plurality of work information items with the relationship flag added thereto.

The control device is a computer including a processor such as a central processing unit (CPU) and a microprocessing unit (MPU), and a memory medium such as a memory. The memory includes a flash memory, a random access memory (RAM), a read only memory (ROM), and the like. The control device provides functions that match a predetermined purpose by controlling peripheral devices through the execution of programs and the like stored in the memory medium. The control device may be constituted by a digital signal processor (DSP), an application specific integrated circuit (ASIC), a field-programmable gate array (FPGA), a numerical operation processor, or the like. Further, the control device may be a system on a chip (SoC) configured by integrating the processor and the memory medium on a single chip.

The imaging device 11 is a camera that captures an image of an object to generate a captured image. The imaging device 11 includes an optical system such as a lens, and an imaging element such as a complementary metal oxide semiconductor (CMOS) or a charge coupled device (CCD). The imaging device 11 captures an image of at least part of the object at a predetermined location by a video such as a still image or a moving image and generates a captured image. The captured image generated by the imaging device 11 may be a two-dimensional image or may be a three-dimensional image. The imaging device 11 may be a fixed point camera or a camera provided in a moving body such as a mobile robot or a drone. The captured image generated by the imaging device 11 is transmitted to the cultivation support device 10 as image data.

The sensor 12 is a measurement instrument for measuring a growth state of the crop. Measurement data of the growth state of the crop measured by the sensor 12 is transmitted to the cultivation support device 10. The sensor 12 transmits the measurement data of the growth state of the crop for each hour or each day to the cultivation support device 10. The cultivation support device 10 acquires the measurement data of the growth state of the crop for each hour or each day as the growth information related to the growth of the crop for each hour or each day.

The sensor 13 is a measurement instrument for measuring a physical quantity in the environment surrounding the crop. The physical quantity is, for example, temperature, humidity, solar radiation amount, or CO₂ concentration, but is not limited thereto. Physical quantity data (measurement data) measured by the sensor 13 is transmitted to the cultivation support device 10. The sensor 13 transmits the physical quantity data of each hour or each day to the cultivation support device 10. The cultivation support device 10 acquires the physical quantity data of each hour or each day as the environment information surrounding the crop.

The terminal device 14 receives input of data from the cultivator who cultivates the crop, and transmits the input data to the cultivation support device 10. The terminal device 14 is an information processing device that communicates with the cultivation support device 10. The terminal device 14 is, for example, a personal computer, a tablet, or a smartphone. The cultivator may measure the growth state of the crop and input the growth state of each hour or each day of the crop to the terminal device 14. The terminal device 14 transmits the growth state of the crop of each hour or each day input by the cultivator to the cultivation support device 10 as the growth information of each hour or each day. The cultivator may measure a fruit yield and input the fruit yield of each hour or each day to the terminal device 14. The terminal device 14 transmits the fruit yield of each hour or each day input by the cultivator to the cultivation support device 10 as the growth information of each hour or each day. The cultivator may measure a fruit quality and input the fruit quality of each hour or each day to the terminal device 14. The terminal device 14 transmits the fruit quality of each hour or each day input by the cultivator to the cultivation support device 10 as the growth information of each hour or each day. The fruit quality includes, for example, fruit sweetness, fruit size, and fruit shape, but is not limited thereto.

The cultivator may input the growth state of the crop, the fruit yield, and the fruit quality of each hour or each day to the cultivation support device 10. The cultivation support device 10 acquires the growth state of the crop, the fruit yield, and the fruit quality of each hour or each day input by the cultivator as the growth information of each hour or each day.

The cultivator may measure the physical quantity in the environment surrounding the crop by using a measurement instrument and input the physical quantity data of each hour or each day to the terminal device 14. The terminal device 14 transmits the physical quantity data of each hour or each day input by the cultivator to the cultivation support device 10 as the environment information. The cultivator may input the physical quantity data of each hour or each day to the cultivation support device 10. The cultivation support device 10 acquires the physical quantity data of each hour or each day input by the cultivator as the environment information of each hour or each day.

The cultivator may input the work information of each hour or each day to the terminal device 14. The terminal device 14 transmits the work information of each hour or each day to the cultivation support device 10. The cultivator may input the work information of each hour or each day to the cultivation support device 10.

The growth information acquisition unit 101 acquires the time-series data of the plurality of growth information items on the basis of at least one of the image data captured by the imaging device 11, the input data input by the cultivator, or the measurement data output from the sensor 12. The growth information acquisition unit 101 may acquire the image data of the crop of each hour or each day from the imaging device 11, and acquire the time-series data of the plurality of growth information items on the basis of the image data of the crop of each hour or each day.

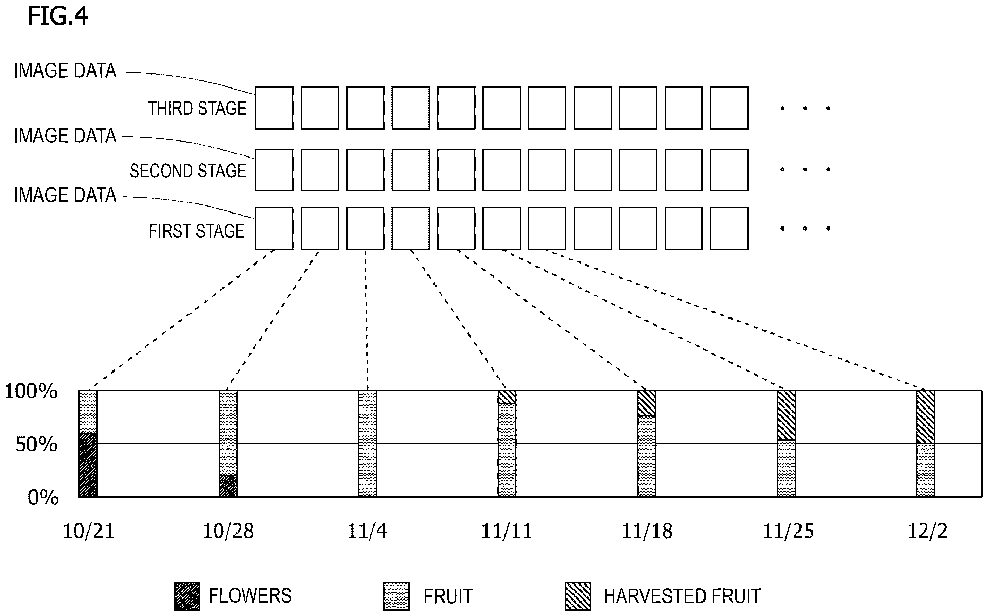

FIG. 4 is a diagram illustrating an example of image analysis processing performed by the growth information acquisition unit 101. FIG. 4 illustrates a plurality of image data created by the imaging device 11 capturing images of cherry tomatoes. For the plurality of image data of a first stage, image data created by capturing images of flower clusters of the cherry tomatoes in the first stage are arranged in time series. For the plurality of image data of a second stage, image data created by capturing images of the flower clusters of the cherry tomatoes in the second stage are arranged in time series. For the plurality of image data of a third stage, image data created by capturing images of the flower clusters of the cherry tomatoes in the third stage are arranged in time series.

FIG. 4 illustrates an example of image analysis processing based on the plurality of image data created by capturing images of the flower clusters of the cherry tomatoes in the first stage. In the graph illustrated in FIG. 4, the vertical axis represents flower ratio (%), fruit ratio (%), and harvested fruit ratio (%), and the horizontal axis represents dates when the cherry tomatoes were imaged. The growth information acquisition unit 101 performs image analysis on each of the plurality of image data in accordance with a predetermined algorithm, and calculates the flower ratio (%), the fruit ratio (%), and the harvested fruit ratio (%) on the basis of images of the flowers, images of the fruits, and images of the harvested fruits included in the image data. The growth information acquisition unit 101 acquires the time-series data of the plurality of growth information items on the basis of at least one of the flower ratio, the fruit ratio, or the harvested fruit ratio.

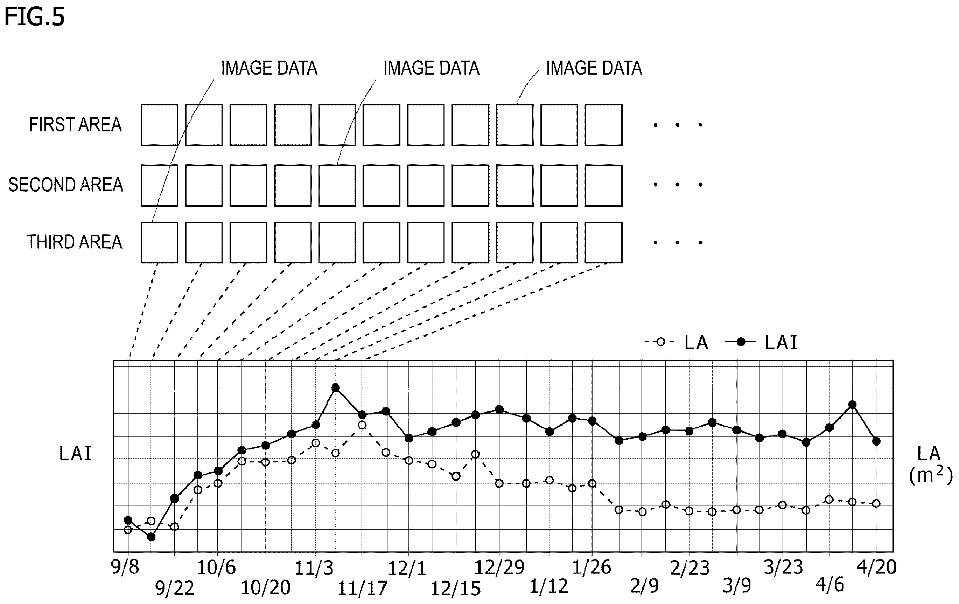

FIG. 5 is a diagram illustrating an example of the image analysis processing performed by the growth information acquisition unit 101. FIG. 5 illustrates a plurality of image data created by capturing images of strawberries by the imaging device 11. For the plurality of image data of a first area, image data created by capturing images of the strawberries cultivated in the first area are arranged in time series. For the plurality of image data of a second area, image data created by capturing images of the strawberries cultivated in the second area are arranged in time series. For the plurality of image data of a third area, image data created by capturing images of the strawberries cultivated in the third area are arranged in time series.

FIG. 5 illustrates an example of the image analysis processing based on the plurality of image data created by capturing images of the strawberries in the third area. In the graph illustrated in FIG. 5, the vertical axis represents LA (m²) and LAI, and the horizontal axis represents dates when the strawberries were imaged. The graph illustrated in FIG. 5 plots LA and LAI corresponding to the dates when the strawberries were imaged. In the graph illustrated in FIG. 5, a dashed line indicates change in LA, and a solid line indicates change in LAI. The growth information acquisition unit 101 performs image analysis on each of the plurality of image data according to a predetermined algorithm, and calculates LA and LAI on the basis of images of leaves included in the image data. The growth information acquisition unit 101 acquires the time-series data of the plurality of growth information items on the basis of at least one of the calculated LA or LAI.

The work information acquisition unit 102 acquires the time-series data of the work information on the basis of data input by the user. The environment information acquisition unit 103 acquires the time-series data of the plurality of environment information on the basis of at least one of the measurement data output from the sensor 13 or the input data input by the user.

The storage unit 104 includes a memory (hard disk or flash memory, for example) in which various data are stored, and a controller that stores the various data in the memory. Another control unit different from the controller may store various data in the memory of the storage unit 104. The storage unit 104 stores attribute information of the crop and the measurement data.

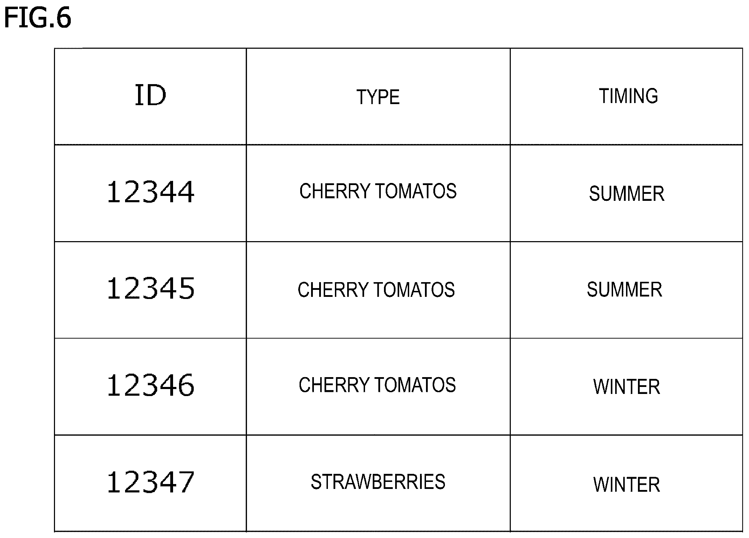

The attribute information of the crop is, for example, management identification (ID), crop type cultivated, crop cultivation period, and crop cultivation location, but is not limited thereto. FIG. 6 is a chart illustrating an example of the attribute information. The attribute information illustrated in FIG. 6 includes "ID," "type," and "timing." "ID" illustrated in FIG. 6 is the management ID of the crop cultivated. "Type" illustrated in FIG. 6 is the type of crop cultivated. "Timing" illustrated in FIG. 6 is a cultivation timing of the crop. As illustrated in FIG. 6, the storage unit 104 stores "12344," "12345," and "12346" as each "ID" in the first row, the second row, and the third row, and stores "cherry tomatoes" as each "type" in the first row, the second row, and the third row. A case in which the "ID" is different but the "type" is the same as in the first row, the second row, and the third row of the attribute information in FIG. 6, means that the type of crop cultivated is the same but each crop is cultivated individually.

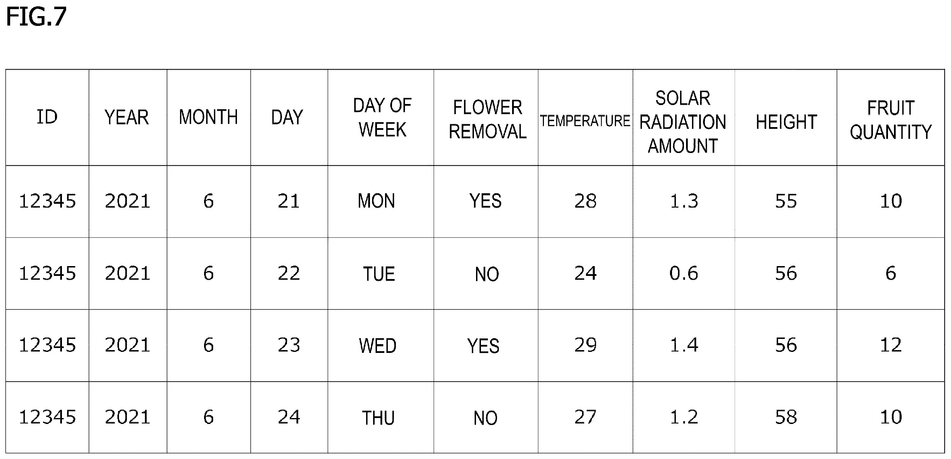

The storage unit 104 stores the time-series data of the plurality of growth information items, the time-series data of the plurality of work information items, and the time-series data of the plurality of environment information items as the measurement data. The storage unit 104 may store the measurement data in a database format. FIG. 7 is a chart illustrating an example of the measurement data stored in the storage unit 104 in a database format. In FIG. 7, the attribute information and the measurement data are stored in the storage unit 104.

As illustrated in FIG. 7, the storage unit 104 stores the measurement data in time series. As illustrated in FIG. 7, the time-series data of the plurality of growth information items, the time-series data of the plurality of work information items, and the time-series data of the plurality of environment information items for the management ID 12345 are arranged from the upper row toward the lower row. In FIG. 7, the growth information for each date, the work information for each date, and the environment information for each date are stored in the storage unit 104. The storage unit 104, not limited to the example illustrated in FIG. 7, may further store the growth information per time interval, the work information per time interval, and the environment information per time interval. Thus, the storage unit 104 may store the growth information of each time unit, the work information of each time unit, and the environment information of each time unit.

"Flower removal" illustrated in FIG. 7 is work on the crop and is an example of work information. "Temperature" illustrated in FIG. 7 is a temperature (°C) around the crop and is an example of environment information. "Solar radiation amount" illustrated in FIG. 7 is a solar radiation amount (kWh/m²) around the crop and is an example of environment information. "Height" illustrated in FIG. 7 is a height (cm) of the crop and is an example of growth information. "Fruit quantity" illustrated in FIG. 7 is the fruit quantity of the crop, and is an example of growth information.

The analysis unit 105 analyzes a causal relationship between the growth information, the work information, and the environment information on the basis of the growth information, the work information, and the environment information. Further, the analysis unit 105 analyzes a causal relationship between the plurality of growth information items, the plurality of work information items, and the plurality of environment information items on the basis of the time-series data of the plurality of growth information items, the time-series data of the plurality of work information items, and the time-series data of the plurality of environment information item. The analysis unit 105 is capable of performing both analysis without consideration of time delay and analysis with consideration of time delay.

First, the analysis without consideration of a time delay will be described. The analysis unit 105 uses the measurement data stored in the storage unit 104 to model the relationship of the measurement data by a graph structure. The analysis unit 105 analyzes, according to a predetermined algorithm, a causal relationship between the growth information, the work information, and the environment information on the basis of the growth information, the work information, and the environment information. The predetermined algorithm may be configured by utilizing a method for analyzing a dependency relationship between variables by a probability model such as, for example, a Bayesian network. The Bayesian network is one type of graphical modeling that expresses a causal relationship between a plurality of probability variables by a directed acyclic graph structure and expresses the causal relationship between the respective probability variables by conditional probabilities. The predetermined algorithm is not limited to the Bayesian network and may be another algorithm such as a neural network (NN) or a convolutional neural network (CNN).

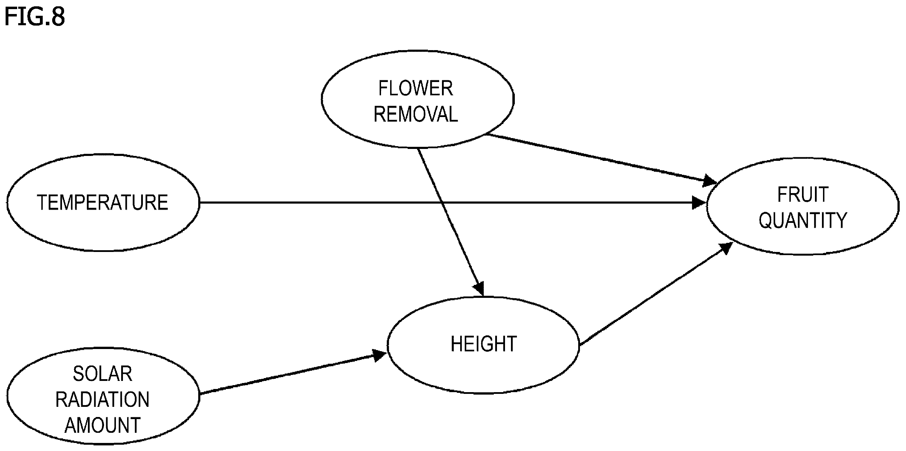

FIG. 8 is a schematic view illustrating an example of a case in which the Bayesian network is used as the method for analyzing the causal relationship. In FIG. 8, each index (flower removal, temperature, solar radiation amount, height, fruit quantity) is set as a node, and two related nodes are connected by a link (edge or branch). In FIG. 8, the links connecting the nodes are indicated by arrows. As illustrated in FIG. 8, it can be seen that the fruit quantity is determined by the effects of the flower removal, the temperature, and the height. The nodes are prepared by a person such as a system designer. The causal relationships between nodes are calculated by calculating a conditional probability distribution, and the nodes with strong relationships are linked. The presence or absence of a link indicating a relationship between nodes can be set by the person depending on whether there is a relationship based on prior knowledge. For example, nodes that seem to be related to fruit quantity include flower removal, temperature, solar radiation amount, height, X, Y, and Z and, as a result of probability calculations of causal relationships, the link state is configured as illustrated in FIG. 8.

Next, the analysis with consideration of a time delay will be described. The analysis unit 105 uses the measurement data (time-series data) stored in the storage unit 104 to model the relationship of the measurement data (time-series data) by a graph structure. The analysis unit 105 analyzes the causal relationship between the plurality of growth information items, the plurality of work information items, and the plurality of environment information items on the basis of the time-series data of the plurality of growth information items, the time-series data of the plurality of work information items, and the time-series data of the plurality of environment information items according to a predetermined algorithm.

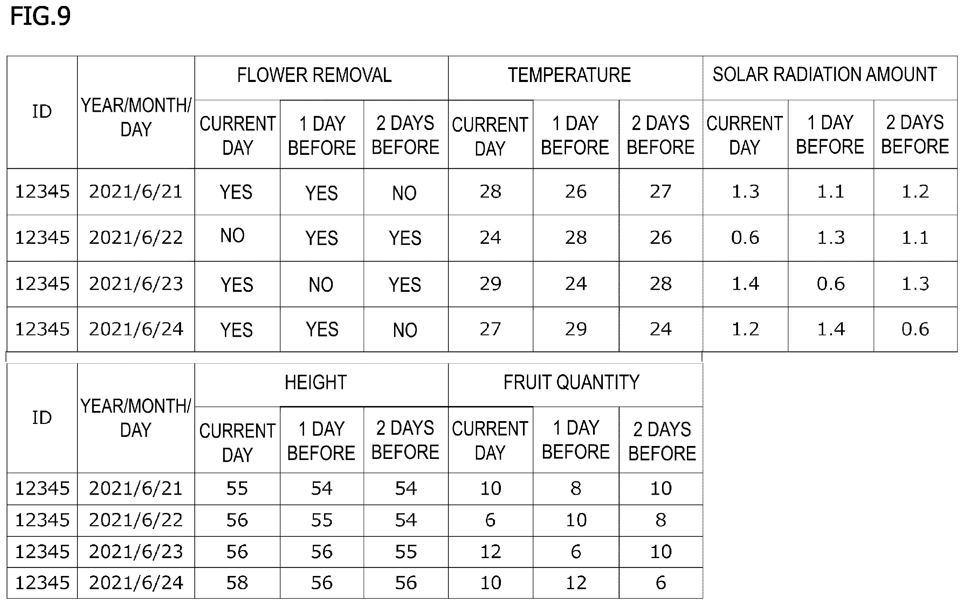

FIG. 9 is a chart illustrating an example of the measurement data stored in the storage unit 104 in a database format. In FIG. 9, the attribute information and the measurement data are stored in the storage unit 104. As illustrated in FIG. 9, the storage unit 104 stores the measurement data in time series. As illustrated in FIG. 9, the time-series data of the plurality of growth information items, the time-series data of the plurality of work information items, and the time-series data of the plurality of environment information items for the management ID 12345 are arranged from the upper row toward the lower row. In FIG. 9, the growth information for each date, the work information for each date, and the environment information for each date are stored in the storage unit 104. The storage unit 104, not limited to the example illustrated in FIG. 9, may further store the growth information per time interval, the work information per time interval, and the environment information per time interval. Thus, the storage unit 104 may store the growth information of each time unit, the work information of each time unit, and the environment information of each time unit.

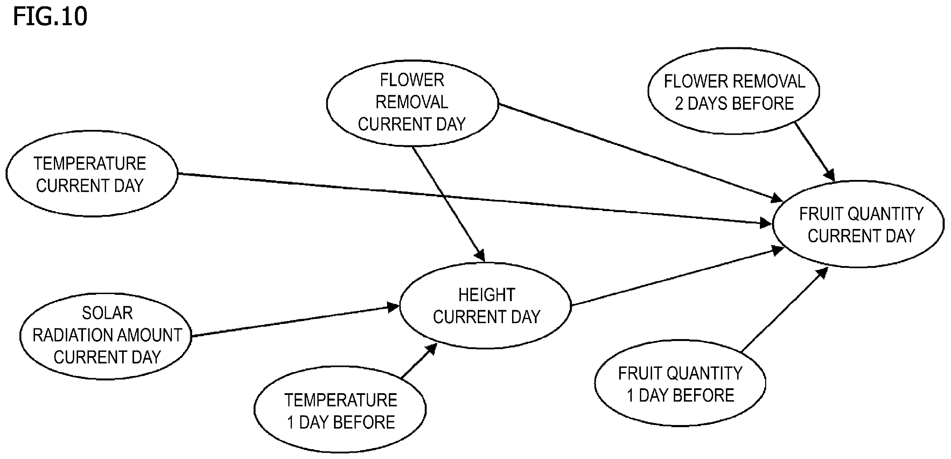

FIG. 10 is a schematic view illustrating an example of a case in which a Bayesian network is used as the method for analyzing the causal relationship. In FIG. 10, each index (flower removal, temperature, solar radiation amount, height, fruit quantity) is set as a node, and two related nodes are connected by a link (edge or branch). In FIG. 10, links connecting the nodes are indicated by arrows. As illustrated in FIG. 10, it can be seen that the height of the current day is determined by the effects of the flower removal on that day, the temperature one day before, and the solar radiation amount on that day. Further, as illustrated in FIG. 10, it can be seen that the fruit quantity on the current day is determined by the effects of the flower removal on that day, the flower removal two days before, the height of that day, and the fruit quantity one day before.

In addition to the measurement data acquired in the present progressive form, measurement data acquired in the past is also stored in the storage unit 104. The analysis unit 105, with reference to the attribute information, acquires data similar to the data being cultivated from the storage unit 104, and adds the acquired data to the analysis, thereby making it possible to perform the analysis using more data. This makes it possible to perform analysis using future-oriented data that has not yet been acquired.

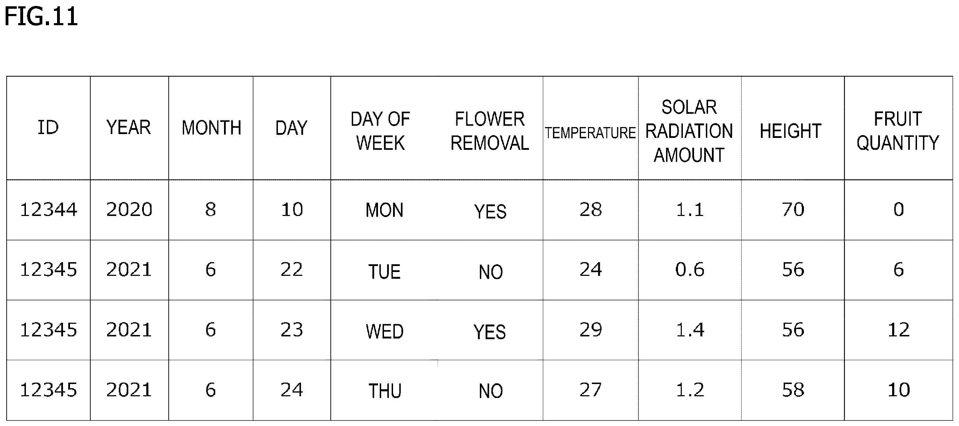

An example of the analysis processing performed by the analysis unit 105 will now be described. For example, the analysis unit 105 refers to the attribute information illustrated in FIG. 6 and extracts, from the storage unit 104, IDs for which the type and the timing included in the attribute information match. In FIG. 6, the type and the timing of the ID 12344 match the type and the timing of the ID 12345, and thus the analysis unit 105 extracts the ID 12344 and the ID 12345 from the storage unit 104. FIG. 11 is a chart illustrating an example of the measurement data stored in the storage unit 104 in a database format. In FIG. 11, the attribute information and the measurement data are stored in the storage unit 104. As illustrated in FIG. 11, the storage unit 104 stores the measurement data in time series.

In FIG. 11, the crop specified by the ID 12344 is a crop that was harvested in 2020, and the crop specified by the ID 12344 is a crop being cultivated in 2021. In FIG. 11, the measurement data up to June 24 related to the crop specified by the ID 12345 is stored in the storage unit 104, and measurement data starting from June 25 related to the crop specified by the ID 12345 is not stored in the storage unit 104. In this case, the analysis unit 105 can analyze the growth of the crop specified by the ID 12345 starting from June 25 by using the measurement data related to the crop specified by the ID 12344 and the measurement data related to the crop specified by the ID 12345. Thus, the analysis unit 105 can analyze the causal relationship of the measurement data of the crop being cultivated on the basis of the measurement data of the crop being cultivated and the measurement data of the crop cultivated in the past.

The relationship information creation unit 106 creates relationship information indicating a relationship between at least one of the plurality of growth information items and at least one of the plurality of work information items on the basis of an analysis result of the causal relationship by the analysis unit 105. The output unit 108 outputs the time-series data of the plurality of growth information items, the time-series data of the plurality of work information items, and the relationship information. The display unit 109 displays the time-series data of the plurality of growth information items, the time-series data of the plurality of work information items, and the relationship information according to the control of the display control unit 110. The output unit 108 outputs the time-series data of the plurality of environment information items. The display unit 109 displays the time-series data of the plurality of environment information items according to the control of the display control unit 110.

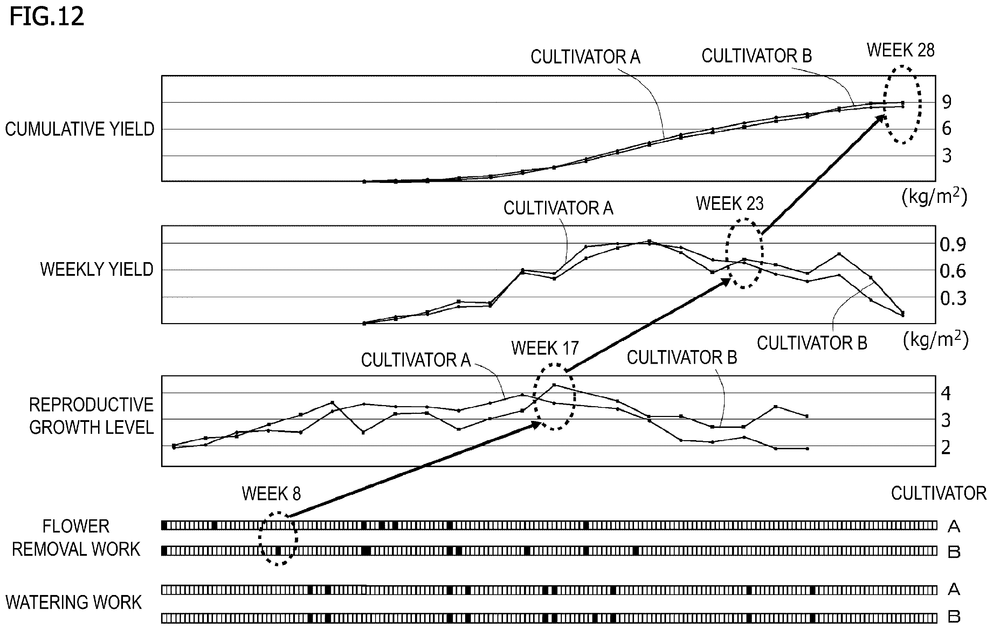

FIG. 12 is a diagram illustrating an example of the time-series data of the plurality of growth information items, the time-series data of the plurality of work information items, and the relationship information displayed on the display unit 109. In FIG. 12, a cumulative yield, a weekly yield, and a reproductive growth level are displayed as the growth information, and flower removal work and watering work are displayed as the work information. Accordingly, in FIG. 12, time-series data of a plurality of cumulative yields, time-series data of a plurality of weekly yields, time-series data of a plurality of reproductive growth levels, time-series data of a plurality of flower removal work, and time-series data of a plurality of watering work are displayed. The cumulative yield is the cumulative amount of the fruit yield of the crop being cultivated. The weekly yield is the weekly yield of the fruit of the crop being cultivated. The reproductive growth level is a level indicating the growth state of a flower, a bud, a fruit, or the like. The information displayed is not limited to the example illustrated in FIG. 12, and time-series data of a plurality of vegetative growth levels may be displayed, or time-series data of a plurality of work including other work such as a fertilization work may be displayed as the time-series data of the plurality of work information items. The vegetative growth level is a level indicating the growth state of a trunk, a branch, a stem, a leaf, or the like. The time-series data of the plurality of environment information items may be displayed.

As illustrated in FIG. 12, the cumulative yield, the weekly yield, the reproductive growth level, the flower removal work, and the watering work for cultivator A are displayed in time series, and the cumulative yield, the weekly yield, the reproductive growth level, the flower removal work, and the watering work for cultivator B are displayed in time series. The cultivator A and the cultivator B cultivate the same type of crop at the same timing and at locations close to each other. In the graph of the cumulative yield illustrated in FIG. 12, the vertical axis represents yield (kg/m²) and the horizontal axis represents time. In the graph of the weekly yield illustrated in FIG. 12, the vertical axis represents yield (kg/m²) and the horizontal axis represents time. In the graph of the reproductive growth level illustrated in FIG. 12, the vertical axis represents reproductive growth level, and the horizontal axis represents time.

In FIG. 12, the flower removal work of week 8, the reproductive growth level of week 17, the weekly yield of week 23, and the cumulative yield of week 28 have a causal relationship. This causal relationship is clear through the causal analysis described above, revealing the elements and links. The chain of influence from flower removal → reproductive growth level → yield is thus understood and, when tracking this through the time-series information, the chain is illustrated as week 8, week 17, week 23, and week 28, respectively. In FIG. 12, dotted ellipses are additionally displayed for the flower removal work of week 8, the reproductive growth level of week 17, the weekly yield of week 23, and the cumulative yield of week 28, and a plurality of arrows connecting the plurality of dotted ellipses are displayed. The plurality of dotted ellipses and the plurality of arrows are examples of relationship information. A solid line or a dashed line may be used instead of the arrow. The relationship information is added to the flower removal work of week 8, highlighting the flower removal work of week 8. The relationship information is added to the reproductive growth level of week 17, highlighting the reproductive growth level of week 17. The relationship information is added to the weekly yield of week 23, highlighting the weekly yield of week 23. The relationship information is added to the cumulative yield of week 28, highlighting the cumulative yield of week 28. By visually recognizing the relationship information, the user can identify that the flower removal work of week 8, the reproductive growth level of week 17, the weekly yield of week 23, and the cumulative yield of week 28 have a causal relationship.

As described above, the relationship information includes the arrow as first additional information and the dotted ellipse as second additional information. The first additional information may include at least one of a solid line, a dashed line, or an arrow. The second additional information may include at least one of a graphic, a color, a character, a number, a symbol, a character string, or a number string. The graphic includes, for example, a perfect circle, an ellipse, a star, and a polygon having three or more sides, but is not limited thereto. For example, in FIG. 12, the flower removal work in week 8, the reproductive growth level of week 17, the weekly yield of week 23, and the cumulative yield of week 28 may be highlighted in red, and other locations may be displayed in black.

As illustrated in FIG. 12, the cultivator A does not perform the flower removal work in week 8, but the cultivator B performs the flower removal work in week 8. As illustrated in FIG. 12, the reproductive growth level for the cultivator B at week 17 exceeds the reproductive growth level for the cultivator A at week 17 and, after week 17, the relationship between the reproductive growth level for the cultivator A and the reproductive growth level for the cultivator B is reversed. As illustrated in FIG. 12, the weekly yield for the cultivator B at week 23 exceeds the weekly yield for the cultivator A at week 23 and, after week 23, the relationship between the weekly yield for the cultivator A and the weekly yield for the cultivator B is reversed. As illustrated in FIG. 12, the cumulative yield for the cultivator B at week 28 exceeds the cumulative yield for the cultivator A at week 28 and, after week 28, the relationship between the cumulative yield for the cultivator A and the cumulative yield for the cultivator B is reversed. That is, the flower removal work of week 8 has a causal relationship with each of an increase in the reproductive growth level at week 17, an increase in the weekly yield at week 23, and an increase in the cumulative yield at week 28. For example, the user can determine the necessity of the flower removal work at week 8 by visually recognizing that the relationship between the cumulative yield for the cultivator A and the cumulative yield for the cultivator B is reversed at week 28.

When the flower removal work and the watering work in FIG. 12 have causal relationships with at least one of the cumulative yield, the weekly yield, or the reproductive growth level, the relationship information may be added to the flower removal work and the watering work. When strengths of the causal relationships of the flower removal work and the watering work differ from each other, different relationship information may be added to each of the flower removal work and the watering work. For example, in a case in which the flower removal work has a stronger causal relationship than that of the watering work, an ellipse or an arrow with a thick line may be added to the flower removal work, and an ellipse or an arrow with a thin line may be added to the watering work. Thus, among the plurality of work information items having causal relationships with at least one of the plurality of growth information items, the graphic added to the work information having a strong causal relationship may differ from the graphic added to the work information having a weak causal relationship. The user can identify the strengths of the causal relationships by visually recognizing that different relationship information is respectively added to the flower removal work and the watering work. That is, the user can identify the strengths of the causal relationships by visually recognizing that a display mode of the relationship information added to the flower removal work and a display mode of the relationship information added to the watering work differ from each other.

The relationship information may include first relationship information indicating a relationship between first growth information of the plurality of growth information items and first work information of the plurality of work information items, and second relationship information indicating a relationship between second growth information of the plurality of growth information items and second work information of the plurality of work information items. In this case, the first relationship information and the second relationship information are displayed on the display unit 109 such that the display mode of the first relationship information and the display mode of the second relationship information differ from each other in accordance with a strength of a first causal relationship between the first growth information and the first work information and a strength of the second causal relationship between the second growth information and the second work information. Furthermore, the relationship information may include third relationship information indicating a relationship between third growth information among the plurality of growth information items and third work information among the plurality of work information items. In this case, the first relationship information, the second relationship information, and the third relationship information are displayed on the display unit 109 such that the display mode of the first relationship information, the display mode of the second relationship information, and a display mode of the third relationship information differ from each other in accordance with strengths of the first causal relationship, the second causal relationship, and the third causal relationship between the third growth information and the third work information.

Processing in a case in which a predetermined cumulative yield is selected from the time-series data of the plurality of cumulative yields will now be described. The user may select a predetermined cumulative yield from the time-series data of the plurality of cumulative yields output from the output unit 108. The user may select a predetermined cumulative yield from the time-series data of the plurality of cumulative yields displayed on the display unit 109. The input unit 111 receives the selection from the user. The relationship information is added to, among the time-series data of the plurality of cumulative yields, the selected cumulative yield. The relationship information is added to, among the time-series data of the plurality of weekly yields, a weekly yield having a relationship with the selected cumulative yield. The relationship information is added to, among the time-series data of the plurality of reproductive growth levels, a reproductive growth level having a relationship with the selected cumulative yield. The relationship information is added to, among the time-series data of the plurality of flower removal work, flower removal work having a relationship with the selected cumulative yield. In a case in which a predetermined cumulative yield is selected from the time-series data of the plurality of cumulative yields, the relationship information creation unit 106 creates relationship information indicating a relationship between the selected predetermined cumulative yield, a predetermined weekly yield, a predetermined reproductive growth level, and predetermined flower removal work on the basis of the analysis result of the causal relationship by the analysis unit 105. In a case in which a predetermined cumulative yield is selected, the predetermined weekly yield is, from among the time-series data of the plurality of weekly yields, a weekly yield having a causal relationship with the selected predetermined cumulative yield. In a case in which a predetermined cumulative yield is selected, the predetermined reproductive growth level is, from among the time-series data of the plurality of reproductive growth levels, a reproductive growth level having a causal relationship with the selected predetermined cumulative yield. In a case in which a predetermined cumulative yield is selected, the predetermined flower removal work is, from among the time-series data of the plurality of flower removal work, flower removal work having a causal relationship with the selected predetermined cumulative yield. Note that the same applies to a case in which a predetermined weekly yield is selected from the time-series data of the weekly yield and a case in which a predetermined reproductive growth level is selected from the time-series data of the reproductive growth levels.

Processing in a case in which predetermined flower removal work is selected from the time-series data of the plurality of flower removal work will now be described. The user may select predetermined flower removal work from the time-series data of the plurality of flower removal work output from the output unit 108. The user may select predetermined flower removal work from the time-series data of the plurality of flower removal work displayed on the display unit 109. The input unit 111 receives the selection from the user. The relationship information is added to, among the time-series data of the plurality of flower removal work, the selected flower removal work. The relationship information is added to, among the time-series data of the plurality of cumulative yields, a cumulative yield having a relationship with the selected flower removal work. The relationship information is added to, among the time-series data of the plurality of weekly yields, a weekly yield having a relationship with the selected flower removal work. The relationship information is added to, among the time-series data of the plurality of reproductive growth levels, a reproductive growth level having a relationship with the selected flower removal work. In a case in which predetermined flower removal work is selected from the time-series data of the plurality of flower removal work, the relationship information creation unit 106 creates relationship information indicating a relationship between the selected predetermined flower removal work, a predetermined cumulative yield, a predetermined weekly yield, a predetermined reproductive growth level, and a predetermined reproductive growth level on the basis of the analysis result of the causal relationship by the analysis unit 105. In a case in which predetermined flower removal work is selected, the predetermined cumulative yield is, from among the time-series data of the plurality of cumulative yields, a weekly yield having a causal relationship with the selected predetermined flower removal work. In a case in which predetermined flower removal work is selected, the predetermined weekly yield is, from among the time-series data of the plurality of weekly yields, a weekly yield having a causal relationship with the selected predetermined flower removal work. In a case in which predetermined flower removal work is selected, the predetermined reproductive growth level is, from among the time-series data of the plurality of reproductive growth levels, a reproductive growth level having a causal relationship with the selected predetermined flower removal work.

The user may select at least one of the time-series data of the plurality of growth information items output by the output unit 108. Further, the user may select at least one of the time-series data of the plurality of growth information items displayed on the display unit 109. In these cases, the relationship information creation unit 106 may create relationship information indicating a relationship between the selected at least one growth information item and at least one of the plurality of work information items on the basis of the analysis result of the causal relationship by the analysis unit 105. The user may select at least one of the time-series data of the plurality of work information items output by the output unit 108. Further, the user may select at least one of the time-series data of the plurality of work information items displayed on the display unit 109. In these cases, the relationship information creation unit 106 may create relationship information indicating a relationship between the selected at least one work information item and at least one of the plurality of growth information items on the basis of the analysis result of the causal relationship by the analysis unit 105. The relationship information creation unit 106 may create a plurality of relationship information items, and the output unit 108 may output the plurality of relationship information items. The display unit 109 may display the plurality of relationship information items.

In the display example illustrated in FIG. 12, the plurality of dotted ellipses and the plurality of arrows are displayed as the relationship information, but the relationship information is not limited to this graphic information. The relationship information may include at least one of a line, a graphic, a character, a number, a symbol, a character string, or a number string. The relationship information may include color information.

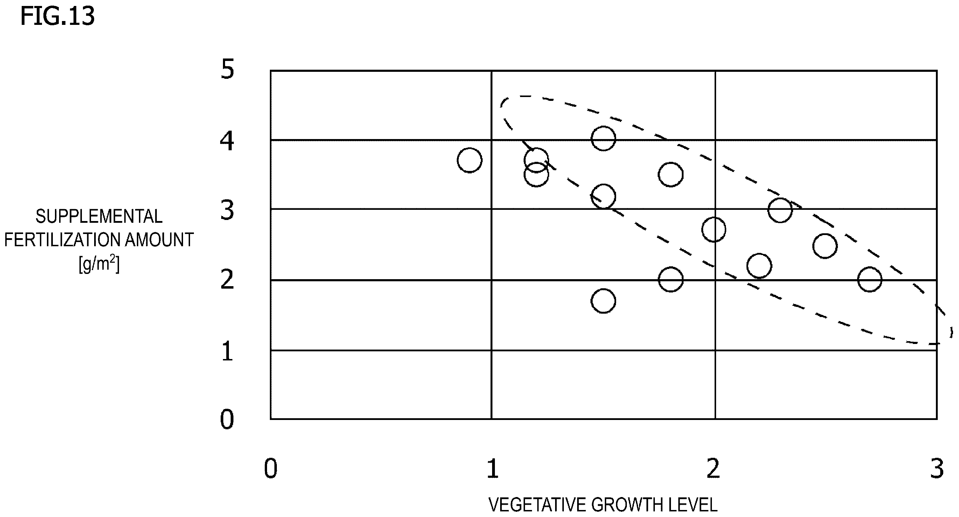

FIG. 13 is a diagram illustrating an example of a scatter diagram. In FIG. 13, the vertical axis represents a supplemental fertilization amount (g/m²) in the supplemental fertilization work for the crop, and the horizontal axis represents the vegetative growth level of the crop after the supplemental fertilization work. FIG. 13 plots the vegetative growth level corresponding to the supplemental fertilization amount. The cultivation support system 1 collects various data on the crop being cultivated and performs causal analysis, causing the data illustrated in FIG. 13 to be output by the output unit 108. The display unit 109 may display the data illustrated in FIG. 13. For example, by checking the data (scatter diagram) illustrated in FIG. 13, the user can identify a relationship between the supplemental fertilization amount and the vegetative growth level in the supplemental fertilization work on the crop.

Further, as illustrated in FIG. 13, standard ranges of the supplemental fertilization amount and the vegetative growth level may be indicated by adding a dotted ellipse. For example, in a case in which the scatter diagram illustrated in FIG. 13 is data related to a crop cultivated by a skilled person, a non-skilled person can identify how much supplemental fertilization is to be applied to the crop in the supplemental fertilization work to change the vegetative growth level of the crop by checking the scatter diagram illustrated in FIG. 13.

The scatter diagram illustrated in FIG. 13 is a scatter diagram illustrating the relationship between the supplemental fertilization amount in the supplemental fertilization work on the crop and the vegetative growth level of the crop after the supplemental fertilization work. The scatter diagram illustrated in FIG. 13 may be a scatter diagram illustrating the relationship between the vegetative growth level of the crop and the supplemental fertilization amount applied in accordance with the vegetative growth level of the crop. In this case, in FIG. 13, the vertical axis represents the supplemental fertilization amount (g/m²) in the supplemental fertilization work on the crop, and the horizontal axis represents the vegetative growth level of the crop before the supplemental fertilization work. That is, the supplemental fertilization amount corresponding to the vegetative growth level is plotted. For example, in a case in which the scatter diagram illustrated in FIG. 13 is data related to the crop cultivated by a skilled person, a non-skilled person can identify an appropriate supplemental fertilization amount according to the vegetative growth level of the crop by checking the scatter diagram illustrated in FIG. 13.

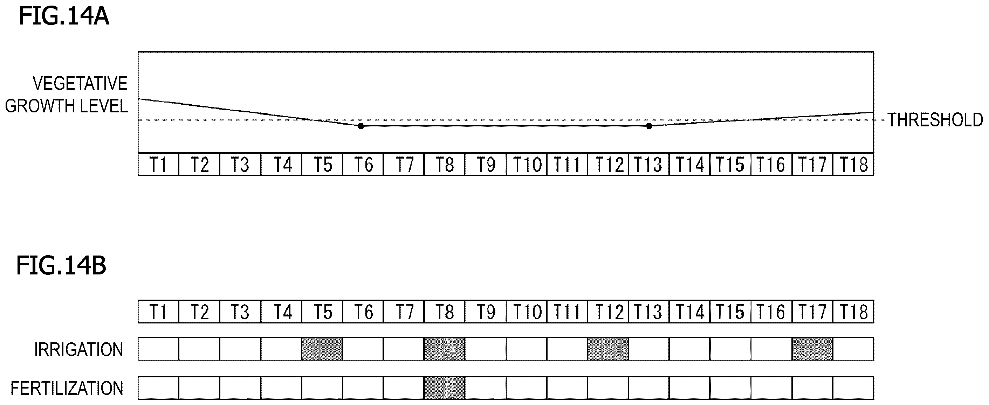

The manual creation unit 107 creates a work manual related to the work on the crop on the basis of the analysis result of the causal relationship by the analysis unit 105. Processing for creating the work manual will now be described with reference to FIG. 14A and FIG. 14B. Here, the processing for creating the work manual on the basis of the growth information and the work information related to the cultivator B will be described. The analysis unit 105 analyzes the causal relationship between the growth information related to the cultivator B, the work information related to the cultivator B, and the environment information related to the cultivator B on the basis of the time-series data of the plurality of growth information items of the cultivator B, the time-series data of the plurality of work information items of the cultivator B, and the time-series data of the plurality of environment information items. The manual creation unit 107 creates the work manual on the basis of the analysis result of the causal relationship between the growth information related to the cultivator B, the work information related to the cultivator B, and the environment information.

The manual creation unit 107 creates instruction information for providing instructions related to work on the crop on the basis of the work manual. The instruction information for providing instructions related to the work on the crop is, for example, information for providing instructions related to the work on the crop (watering work instructions, for example) at a predetermined timing, but is not limited to this information. The output unit 108 outputs the instruction information for providing instructions related to the work on the crop. The display unit 109 displays the instruction information for providing instructions related to the work on the crop. The user checks the instruction information output from the output unit 108 or the instruction information displayed on the display unit 109, and executes the work on the crop (watering work, for example) on the basis of the instruction information. In a case in which the information providing instructions related to performing the work on the crop at a predetermined timing is output from the output unit 108, the user can perform the work on the crop being cultivated at the predetermined timing. In a case in which the information providing instructions related to performing work on the crop at a predetermined timing is displayed on the display unit 109, the user can perform the work on the crop being cultivated at the predetermined timing. For example, in a case in which the work manual is created on the basis of the growth information and the work information related to the cultivator B, the user can perform the work on the crop being cultivated at the same timing as the timing of the work performed by the skilled person. This makes it possible to perform necessary work on the crop at an appropriate timing. Further, this makes it possible to avoid performing the work on the crop at an inappropriate timing. The work manual may include instruction information for providing instructions related to the work on the crop. The output unit 108 may output the work manual. The display unit 109 may display the work manual. By using the work manual created by the manual creation unit 107, it is also possible to improve a previous manual.

FIG. 14A is a diagram illustrating an example of the vegetative growth level of the crop. FIG. 14B is a diagram illustrating an example of the instruction information. The vertical axis in FIG. 14A represents a relative magnitude of the vegetative growth level of the crop, and the horizontal axis in FIG. 14A represents time. In FIG. 14B, the instruction information includes timing information related to the timing of performing the watering work and timing information related to the timing of performing the fertilization work. The user checks the timing information output from the output unit 108 or visually recognizes the timing information displayed on the display unit 109. The user performs the watering work at timings T5, T8, T12, and T17, and performs the fertilization work at the timing T5. As illustrated in FIG. 14A, at timing T6, the relative magnitude of the vegetative growth level of the crop is less than a threshold. The watering work and the fertilization work are executed at the timing T8, and the watering work is executed at the timing T12, and thus the relative magnitude of the vegetative growth level of the crop is equal to or greater than the threshold after timing T15, as illustrated in FIG. 14A. Thus, the vegetative growth level of the crop is improved by executing the work on the crop at an appropriate timing.

The present invention may be regarded as a cultivation support system having at least part of each configuration, each means, and each function described above. The present invention may be regarded as a cultivation support method including at least part of each processing described above. The present invention may be regarded as a method for executing at least part of each processing described above by a computer. The present invention may be regarded as a program for causing a computer to execute each processing described above, and the program may be provided to the computer via a network or from a computer-readable recording medium or the like that holds data in a non-transitory manner.

### <<Computer-Readable Recording Medium>>

A program for causing an information processing device or any other machine or device (hereinafter referred to as a computer or the like) to implement any of the functions described above may be recorded in a recording medium readable by the computer or the like. The functions can be provided by causing the computer or the like to load the program from the recording medium and to execute the program.

Here, the recording medium readable by the computer or the like refers to a recording medium capable of storing information such as data or programs by an electrical, magnetic, optical, mechanical, or chemical action in such a manner that the computer or the like can read the information from the recording medium. Among such recording media, those which can be removed from the computer or the like include, for example, flexible disks, magneto-optical discs, CD-ROMs, CD-R/Ws, DVDs, Blu-ray discs, and memory cards such as flash memories. Recording media fixed to the computer or the like include hard disks, ROMs, and the like.

### <Supplementary Note 1>

A cultivation support device (10) configured to support cultivation of a crop, the cultivation support device (10) including:
a growth information acquisition unit (101) configured to acquire time-series data of a plurality of growth information items related to a growth state of a crop;
a work information acquisition unit (102) configured to acquire time-series data of a plurality of work information items related to work on the crop;
an environment information acquisition unit (103) configured to acquire time-series data of a plurality of environment information items related to an environment surrounding the crop; an analysis unit (105) configured to analyze a causal relationship between the plurality of growth information items, the plurality of work information items, and the plurality of environment information items on the basis of the time-series data of the plurality of growth information items, the time-series data of the plurality of work information items, and the time-series data of the plurality of environment information items;
a relationship information creation unit (106) configured to create relationship information indicating a relationship between at least one of the plurality of growth information items and at least one of the plurality of work information items on the basis of an analysis result of the causal relationship; and
an output unit (108) configured to output the time-series data of the plurality of growth information items, the time-series data of the plurality of work information items, and the relationship information.

### <Supplementary Note 2>

The cultivation support device (10) according to supplementary note 1, including
a manual creation unit configured to create a work manual related to the work on the crop on the basis of the analysis result of the causal relationship.

### <Supplementary Note 3>

The cultivation support device (10) according to supplementary note 2, wherein the manual creation unit is configured to create instruction information for providing instructions related to the work on the crop on the basis of the work manual, and the output unit (108) is configured to output the instruction information.

### Supplementary Note 4>

The cultivation support device (10) according to any one of supplementary notes 1 to 3, wherein
the output unit (108) is configured to output the time-series data of the plurality of environment information items.

### <Supplementary Note 5>

The cultivation support device (10) according to any one of supplementary notes 1 to 4, wherein
the growth information acquisition unit (101) is configured to acquire the time-series data of the plurality of growth information items on the basis of at least one of image data captured by an imaging device configured to capture an image of an object, input data input by a cultivator who cultivates the crop, or measurement data output from a sensor configured to measure the growth state of the crop.

### <Supplementary Note 6>

The cultivation support device (10) according to any one of supplementary notes 1 to 5, wherein
the work information acquisition unit (102) is configured to acquire the time-series data of the plurality of work information items on the basis of input data input by a cultivator who cultivates the crop.

### <Supplementary Note 7>

The cultivation support device (10) according to any one of supplementary notes 1 to 6, wherein
the environment information acquisition unit (103) is configured to acquire the time-series data of the environment information on the basis of at least one of measurement data output from a sensor configured to measure the environment information or input data input by a cultivator who cultivates the crop.

### <Supplementary Note 8>

The cultivation support device (10) according to any one of supplementary notes 1 to 7, wherein
the output unit (108) is a display unit (109), and
the display unit (109) is configured to display the time-series data of the plurality of growth information items, the time-series data of the plurality of work information items, and the relationship information.

### <Supplementary Note 9>

The cultivation support device (10) according to supplementary note 8, wherein the relationship information includes
first relationship information indicating a relationship between first growth information among the plurality of growth information items and first work information among the plurality of work information items, and
second relationship information indicating a relationship between second growth information among the plurality of growth information items and second work information among the plurality of work information items, and
the first relationship information and the second relationship information are displayed on the display unit (109) such that a display mode of the first relationship information and a display mode of the second relationship information differ from each other in accordance with a strength of a first causal relationship between the first growth information and the first work information and a strength of a second causal relationship between the second growth information and the second work information.

### <Supplementary Note 10>

The cultivation support device (10) according to supplementary note 8 or 9, wherein the relationship information includes
first additional information including at least one of a line or an arrow connecting the at least one of the plurality of growth information items and the at least one of the plurality of work information items, and
second additional information added to the at least one of the plurality of growth information items and the at least one of the plurality of work information items connected by the at least one line or arrow.

### <Supplementary Note 11>

The cultivation support device (10) according to any one of supplementary notes 8 to 10, wherein
the relationship information creation unit (106) is configured to create, when at least one of the growth information items in the time-series data of the plurality of growth information items is selected, the relationship information indicating a relationship between the selected at least one growth information item and the at least one of the plurality of work information items, on the basis of the analysis result of the causal relationship, and
the relationship information creation unit (106) is configured to create, when at least one of the work information items in the time-series data of the plurality of work information items is selected, the relationship information indicating a relationship between the selected at least one work information item and the at least one of the plurality of growth information items, on the basis of the analysis result of the causal relationship.

### <Supplementary Note 12>

The cultivation support device (10) according to any one of supplementary notes 1 to 11, wherein
the output unit (108) is a communication unit, and
the communication unit is configured to output, via a communication network, the time-series data of the plurality of growth information items, the time-series data of the plurality of work information items, and the relationship information.

### <Supplementary Note 13>

The cultivation support device (10) according to any one of supplementary notes 1 to 11, wherein
the output unit (108) is an audio unit, and
the audio unit is configured to output audio related to the time-series data of the plurality of growth information items, the time-series data of the plurality of work information items, and the relationship information.

### <Supplementary Note 14>

The cultivation support device (10) according to any one of supplementary notes 1 to 11, wherein
the output unit (108) is a print unit, and
the print unit is configured to print, on a recording medium, the time-series data of the plurality of growth information items, the time-series data of the plurality of work information items, and the relationship information.

### Supplementary Note 15>

A cultivation support method executed by a computer, the cultivation support method including:
acquiring time-series data of a plurality of growth information items related to a growth state of a crop (S11);
acquiring time-series data of a plurality of work information items related to work on the crop (S12);
acquiring time-series data of a plurality of environment information items related to an environment surrounding the crop (S13);
analyzing a causal relationship between the plurality of growth information items, the plurality of work information items, and the plurality of environment information items on the basis of the time-series data of the plurality of growth information items, the time-series data of the plurality of work information items, and the time-series data of the plurality of environment information items (S15);
creating relationship information indicating a relationship between at least one of the plurality of growth information items and at least one of the plurality of work information items on the basis of an analysis result of the causal relationship (S16); and
outputting the time-series data of the plurality of growth information items, the time-series data of the plurality of work information items, and the relationship information (S17).

### <Supplementary Note 16>

A program for causing a computer to execute:
acquiring time-series data of a plurality of growth information items related to a growth state of a crop (S11);
acquiring time-series data of a plurality of work information items related to work on the crop (S12);
acquiring time-series data of a plurality of environment information items related to an environment surrounding the crop (S13);
analyzing a causal relationship between the plurality of growth information items, the plurality of work information items, and the plurality of environment information items on the basis of the time-series data of the plurality of growth information items, the time-series data of the plurality of work information items, and the time-series data of the plurality of environment information items (S15);
creating relationship information indicating a relationship between at least one of the plurality of growth information items and at least one of the plurality of work information items on the basis of an analysis result of the causal relationship (S16); and
outputting the time-series data of the plurality of growth information items, the time-series data of the plurality of work information items, and the relationship information (S17).

### REFERENCE SIGNS

1 Cultivation support system
10 Cultivation support device
11 Imaging device
12, 13 Sensor
14 Terminal device
101 Growth information acquisition unit
102 Work information acquisition unit
103 Environment information acquisition unit
104 Storage unit
105 Analysis unit
106 Relationship information creation unit
107 Manual creation unit
108 Output unit
109 Display unit
110 Display control unit
111 Input unit

## Claims

1. A cultivation support device configured to support cultivation of a crop, the cultivation support device comprising:
a growth information acquisition unit configured to acquire time-series data of a plurality of growth information items related to a growth state of a crop;
a work information acquisition unit configured to acquire time-series data of a plurality of work information items related to work on the crop;
an environment information acquisition unit configured to acquire time-series data of a plurality of environment information items related to an environment surrounding the crop;
an analysis unit configured to analyze a causal relationship between the plurality of growth information items, the plurality of work information items, and the plurality of environment information items on the basis of the time-series data of the plurality of growth information items, the time-series data of the plurality of work information items, and the time-series data of the plurality of environment information items;
a relationship information creation unit configured to create relationship information indicating a relationship between at least one of the plurality of growth information items and at least one of the plurality of work information items on the basis of an analysis result of the causal relationship; and
an output unit configured to output the time-series data of the plurality of growth information items, the time-series data of the plurality of work information items, and the relationship information.

2. The cultivation support device according to claim 1, comprising
a manual creation unit configured to create a work manual related to the work on the crop on the basis of the analysis result of the causal relationship.

3. The cultivation support device according to claim 2, wherein
the manual creation unit is configured to create instruction information for providing instructions related to the work on the crop on the basis of the work manual, and
the output unit is configured to output the instruction information.

4. The cultivation support device according to claim 1, wherein
the output unit is configured to output the time-series data of the plurality of environment information items.

5. The cultivation support device according to claim 1, wherein
the growth information acquisition unit is configured to acquire the time-series data of the plurality of growth information items on the basis of at least one of image data captured by an imaging device configured to capture an image of an object, input data input by a cultivator who cultivates the crop, or measurement data output from a sensor configured to measure the growth state of the crop.

6. The cultivation support device according to claim 1, wherein
the work information acquisition unit is configured to acquire the time-series data of the plurality of work information items on the basis of input data input by a cultivator who cultivates the crop.

7. The cultivation support device according to claim 1, wherein
the environment information acquisition unit is configured to acquire the time-series data of the environment information on the basis of at least one of measurement data output from a sensor configured to measure the environment information or input data input by a cultivator who cultivates the crop.

8. The cultivation support device according to claim 1, wherein
the output unit is a display unit, and
the display unit is configured to display the time-series data of the plurality of growth information items, the time-series data of the plurality of work information items, and the relationship information.

9. The cultivation support device according to claim 8, wherein
the relationship information includes
first relationship information indicating a relationship between first growth information among the plurality of growth information items and first work information among the plurality of work information items, and
second relationship information indicating a relationship between second growth information among the plurality of growth information items and second work information among the plurality of work information items, and
the first relationship information and the second relationship information are displayed on the display unit such that a display mode of the first relationship information and a display mode of the second relationship information differ from each other in accordance with a strength of a first causal relationship between the first growth information and the first work information and a strength of a second causal relationship between the second growth information and the second work information.

10. The cultivation support device according to claim 8, wherein
the relationship information includes
first additional information including at least one of a line or an arrow connecting the at least one of the plurality of growth information items and the at least one of the plurality of work information items, and
second additional information added to the at least one of the plurality of growth information items and the at least one of the plurality of work information items connected by the at least one line or arrow.

11. The cultivation support device according to any one of claims 8 to 10, wherein
the relationship information creation unit is configured to create, when at least one of the growth information items in the time-series data of the plurality of growth information items is selected, the relationship information indicating a relationship between the selected at least one growth information item and the at least one of the plurality of work information items, on the basis of the analysis result of the causal relationship, and
the relationship information creation unit is configured to create, when at least one of the work information items in the time-series data of the plurality of work information items is selected, the relationship information indicating a relationship between the selected at least one work information item and the at least one of the plurality of growth information items, on the basis of the analysis result of the causal relationship.

12. The cultivation support device according to claim 1, wherein
the output unit is a communication unit, and
the communication unit is configured to output, via a communication network, the time-series data of the plurality of growth information items, the time-series data of the plurality of work information items, and the relationship information.

13. The cultivation support device according to claim 1, wherein
the output unit is an audio unit, and
the audio unit is configured to output audio related to the time-series data of the plurality of growth information items, the time-series data of the plurality of work information items, and the relationship information.

14. The cultivation support device according to claim 1, wherein
the output unit is a print unit, and
the print unit is configured to print, on a recording medium, the time-series data of the plurality of growth information items, the time-series data of the plurality of work information items, and the relationship information.

15. A cultivation support method executed by a computer, the cultivation support method comprising:
acquiring time-series data of a plurality of growth information items related to a growth state of a crop;
acquiring time-series data of a plurality of work information items related to work on the crop;
acquiring time-series data of a plurality of environment information items related to an environment surrounding the crop;
analyzing a causal relationship between the plurality of growth information items, the plurality of work information items, and the plurality of environment information items on the basis of the time-series data of the plurality of growth information items, the time-series data of the plurality of work information items, and the time-series data of the plurality of environment information items;
creating relationship information indicating a relationship between at least one of the plurality of growth information items and at least one of the plurality of work information items on the basis of an analysis result of the causal relationship; and
outputting the time-series data of the plurality of growth information items, the time-series data of the plurality of work information items, and the relationship information.

16. A program for causing a computer to execute:
acquiring time-series data of a plurality of growth information items related to a growth state of a crop;
acquiring time-series data of a plurality of work information items related to work on the crop;
acquiring time-series data of a plurality of environment information items related to an environment surrounding the crop;
analyzing a causal relationship between the plurality of growth information items, the plurality of work information items, and the plurality of environment information items on the basis of the time-series data of the plurality of growth information items, the time-series data of the plurality of work information items, and the time-series data of the plurality of environment information items;
creating relationship information indicating a relationship between at least one of the plurality of growth information items and at least one of the plurality of work information items on the basis of an analysis result of the causal relationship; and
outputting the time-series data of the plurality of growth information items, the time-series data of the plurality of work information items, and the relationship information.
